# EUROPÄISCHE PATENTSCHRIFT

(11) **EP 1 157 919 B1**
(45) Veröffentlichungstag und Bekanntmachung des Hinweises auf die Patenterteilung: **08.06.2005**
(21) Anmeldenummer: 01108974.5
(22) Anmeldetag: 11.04.2001
(51) Int. Cl.: B62K 23/04, B62M 25/04

(54) **Integrierter Drehgriffschalter**
Integrated twist grip for a bicycle gear shift
Poignée tournante integrée pour le changement de vitesse de bicyclette

(30) Priorität: 25.05.2000 DE 10025887
(43) Veröffentlichungstag der Anmeldung: 28.11.2001
(73) Patentinhaber: SRAM Deutschland GmbH, 97404 Schweinfurt (DE)
(72) Erfinder: Wessel, Robert, 97080 Würzburg (DE)

(56) Entgegenhaltungen:
- EP-A- 0 523 257
- EP-A- 0 763 463
- DE-U- 9 216 999
- US-A- 5 197 927
- US-A- 5 823 058
- US-A- 5 845 537
- US-A- 6 055 882

## Beschreibung

Die vorliegende Erfindung betrifft einen integrierten Drehgriffschalter zum Schalten von Fahrradgetrieben, wie Mehrgangnaben oder Kettenschaltungen. Dokument EP0523257 offenbart einen integrierten Drehgriffschalter gemäß dem Oberbegriff des Anspruches 1.

Drehgriffschalter zur Steuerung von Fahrradgetriebe gelangen allgemein im vormontierten Zustand zur Montage am Fahrrad, wobei sie auf das Lenkerrohr aufgeschoben werden. Anschließend wird der Drehgriffschalter am Lenker justiert und fixiert, was meist mit einer Klemmeinrichtung geschieht.

In einen vormontierten Drehgriffschalter sind mehrere Schalterkomponenten miteinander gefügt, oftmals kommt eine Rastverbindung zur Anwendung, die sich nach der Montage am Lenkerrohr nicht mehr lösen läßt.

Beim Handling des vormontierten Drehgriffschalters kann es dennoch passieren, daß sich die noch lösbare Rastverbindung trennt, wodurch die Vormontage der Komponenten aufgelöst wird und ein erhöhter Montageaufwand entsteht.

Aus diesem Grund ist es vorteilhaft, die Rastverbindung sicherer zu machen. Dementsprechend setzt sich die Erfindung die Aufgabe, die Sicherheit der Fixierung der Komponenten in einer vormontierten Einheit zu erhöhen. Diese Aufgabe wird mit einer Klemmschelle gelöst. Neben Ihrer Aufgabe der Fixierung des Schalters auf dem Lenkerrohr verhindert sie, dass sich die Rastverbindung lösen kann.

Weiterhin bestehen Platzprobleme im Bereich eine vorrangig aus Kunststoffen aufgebauten Schaltergehäuses. Im Bereich des Gehäuses befinden sich Rasteinrichtungen, um die Komponenten des Schalters im vormontierten Zustand zu fixieren. Weiterhin ist notwendig, den Schalter auf dem Lenkerrohr festzuklemmen. Das Kunststofmaterial allein weist nicht die dazu erforderliche Festigkeit auf, bzw. Kriechvorgänge des Materials erschweren eine dauerhaft sichere Fixierung das Schalters auf dem Lenkerrohr. Eine im Gehäuse angeordnete Klemmschelle löst dieses Problem, allerdings führt dann die strikte Trennung zwischen der Verrastung von anderen Komponenten des Schalters mit dem Gehäuse von der Klemmung des Schalters am Lenker zu einem großeren Platzbedarf.

Dieses Problem wird erfindungsgemäß mit einer Kombination beider Funktionen und einer direkten Wechselwirkung zwischen den betreffenden Funktionelementen erreicht.

Erfindungsgemäß wird vorgeschlagen, am Lagerrohr in radialer Richtung elastische Zungen anzuordnen, die am Ende mit einem Rastprofil ausgestattet sind, um mit dem Gegenprofil am Schaltergehäuse eine verdreh- sowie verschiebesichere formschlüssige Verbindung bilden. Über diese elastischen Zungen können Drehgriffteil und Aufwickelspule sowie das Schaltergehäuse mit der Schaltermechanik zur Vormontage auf das Lagerrohr aufgereiht werden. Dieser Zusammenbau wird durch die Schnappverbindung zwischen Lagerrohr und Schaltergehäuse gegen unbeabsichtigtes Zerlegen gesichert. Dadurch wird die Anzahl der zur Endmontage am Lenker bereitzustellenden und zu montierenden Drehgriffkomponenten deutlich reduziert. Mit der im Innendurchmesser des Schaltergehäuses angeordneten Klemmschelle und der dazugehörigen Schraube ist der komplette Drehgriffschalter einteilig und montagefertig. Wird die Schraube an der Klemmschelle angezogen, so ist ein sicherer Sitz des Drehgriffschalters inklusive Griffendstück am Lenker gewährleistet. Das Lagerrohr bzw. das Drehgriffteil mit der Aufwickelspule kann erst wieder nach dem Entfernen der Klemmschelle demontiert bzw. vom Schaltergehäuse abgekoppelt werden. Zur Gewährleistung eines spielfreien Sitzes am Lenker wird der Innendurchmesser am Lagerrohr und am Griffendstück entsprechend eng bemessen bzw. toleriert. Zur Entschärfung der Toleranzempfindlichkeit kann auch eine gezielte Verformung des Innenbereiches genutzt werden. So kann die Innenfläche des Lagerrohrs in einem Teilbereich, vorzugsweise axial neben den elastischen Zungen, nicht kreisförmig, sondern oval oder polygonal geformt sein, um dann beim Anpassen an den runden Lenkerquerschnitt einen spielfreien Sitz zu erzielen. Der selbe Effekt wird erreicht, wenn dieser Lagerrohr-Innenbereich mit schmalen Erhebungen ausgestattet wird, die im wesentlichen in axialer Richtung verlaufen und sich bei der Montage verformen und dann festsitzen. Es wird auch vorgeschlagen am Lagerrohr im Bereich der Griffendstück-Überdeckung Durchbrüche vorzusehen, damit beim Anbringen des Griffendstückes, Material in den Innendurchmesser des Lagerrohrs hineinragt, um dann bei der Endmontage mit dem Lenker entsprechend verformt und angepreßt zu werden.

Das Lagerrohr ist in Richtung Griffendstück verlängert. Das Griffendstück wird mit einer chemischen Overmolding-Verbindung am Lagerrohr fixiert. Dieses Lagerrohr ist, im Gegensatz zum beschriebenen Stand der Technik, nicht mehr drehfest mit dem elastischen Drehgriffteil und der Aufwickelspule verbunden, sondern dient diesen lediglich als Lagerung und bildet mit einem festen Zwischenring den erforderlichen axialen Anschlag für das drehfest mit der Aufwickelspule verbundene Drehgriffteil.

### Kurzbeschreibung der Zeichnung

Anhand von Zeichnungen wird ein Ausführungsbeispiele zur weiteren Erläuterung der Erfindungsmerkmale gezeigt:
- Fig. 1: zeigt den Längsschnitt durch den kompletten Drehgriffschalter mit den um das Lagerrohr angeordneten Griff- und Schalterkomponenten
- Fig. 2: zeigt eine perspektivische Darstellung des Lagerrohrs mit fester Zwischenscheibe und die mit einem Rastprofil ausgestatteten elastischen Zungen
- Fig. 3: zeigt eine perspektivische Darstellung des Schaltergehäuses mit den Gegenflächen zur Aufnahme des Rastprofils an den elastischen Zungen
- Fig. 4: zeigt eine Explosionsdarstellung der Schalterkomponenten vor der Vormontage

### Beschreibung des bevorzugten Ausführungsbeispiels

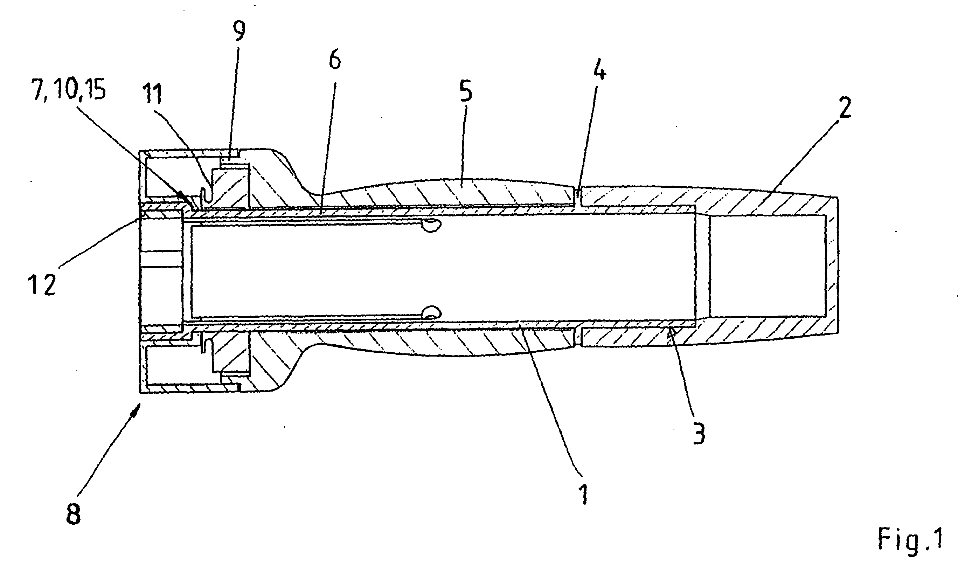

In Fig. 1 wird der Längsschnitt durch den kompletten Drehgriffschalter gezeigt. Die Schalterkomponenten sind im wesentlichen um das Lagerrohr 1 angeordnet. Der Innendurchmesser des Lagerrohrs 1 ist so bemessen, daß ein spielfreier Sitz am Lenker gewährleistet ist. Das aus einem Elastomermaterial bestehende Griffendstück 2 ist mit dem aus Hartkunststoff bestehenden Lagerrohr 1, vorzugsweise mittels einer Overmolding-Verbindung 3 , starr verbunden . Der über das Lagerrohr 1 hinaus ragende Abschnitt des drehfesten Griffendstückes 2 hat einen kleineren Innendurchmesser als das Lagerrohr 1 , damit es spielfrei bzw. mit Spannung am Lenkerende sitzt. Die Außenkontur des Griffendstückes 2 hat zur Verbesserung der Ergonomie eine leicht ballige Form.

Eine Zwischenscheibe 4 sitzt fest auf dem Lagerrohr 1 oder wird mit dem Lagerrohr einstückig hergestellt. Diese Zwischenscheibe 4 dient als axialer Anschlag für das Griffendstück 2 und das Drehgriffteil 5 und reduziert die sonst auftretende axiale Reibung zwischen beiden Griffteilen.

Am Lagerrohr 1 sind zwei in radialer Richtung elastische Zungen 6 mit Rastprofilen 7 angeordnet. Die elastischen Zungen 6 und das Rastprofil 7 können nach innen ausweichen und bilden mit den entsprechenden Gegenprofilen im Schaltergehäuse 8 eine Schnappverbindung 10 . Das Drehgriffteil 5 und die Aufwickelspule 11 können bei der Vormontage über die elastischen Zungen 6 aufgefädelt werden und sind dann gegen ungewolltes Abstreifen gesichert. Sind die Rastprofile 7 im Schaltergehäuse 8 eingeschnappt. Die Klemmschelle 12 wird innerhalb der elastischen Zungen axial in das Gehäuse eingefügt. So ist der Drehgriffschalter, nach einer Endmontage auf dem Lenker und nach dem Anziehen der Schraube (hier nicht gezeigt) an der Klemmschelle 12, gegen Verdrehung oder Verschiebung gesichert. Eine Demontage des Schaltergehäuses 8 und des Drehgriffteils 5 mit der Aufwickelspule 11 ist erst wieder nach Entfernung der Klemmschelle 12 möglich. Der dem Schaltergehäuse 8 zugewandte Rand 9 des Drehgriffteils 5 ragt in das Schaltergehäuse 8 hinein und bildet eventuell auch als Labyrinth ausgebildet eine entsprechende Dichtung. Die Länge und der Innendurchmesser des Drehgriffteils 5 ist so dimensioniert , daß ein leichtgängiges Drehen auf dem Lagerrohr 1 sichergestellt ist. Die Aufwickelspule 11 ist drehfest mit dem Drehgriffteil 5 verbunden bzw. bildet mit dem Drehgriffteil 5 ein gemeinsames Bauteil. Die Außenform des Drehgriffteils 5 ist im Griffbereich ballig geformt oder verfügt über eine, an die Hand angepaßte ergonomische Griffkontur.

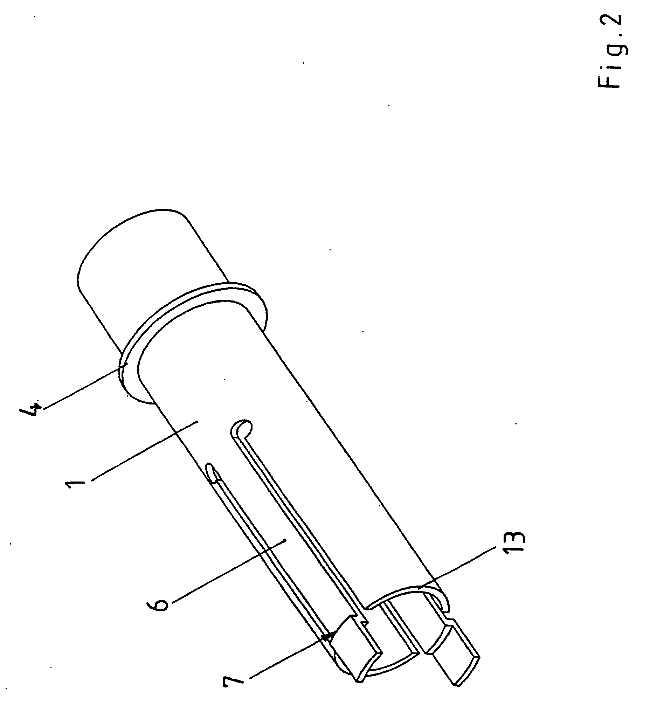

Fig. 2 zeigt eine perspektivische Darstellung des Lagerrohrs 1 mit der integrierten Zwischenscheibe 4 . Der Übergang zu den in radialer Richtung elastischen Zungen 6 ist zur Vermeidung von Kerbwirkung gerundet. Die elastischen Zungen 6 verfügen an ihren Enden über ein Rastprofil 7. In Zugrichtung wird das Lagerrohr 1 mit dem Rastprofil 7 im Schaltergehäuse 8 gehalten. In Schubrichtung stützt sich das Lagerrohr 1 über die Stirnflächen 13 am Schaltergehäuse 8 ab.

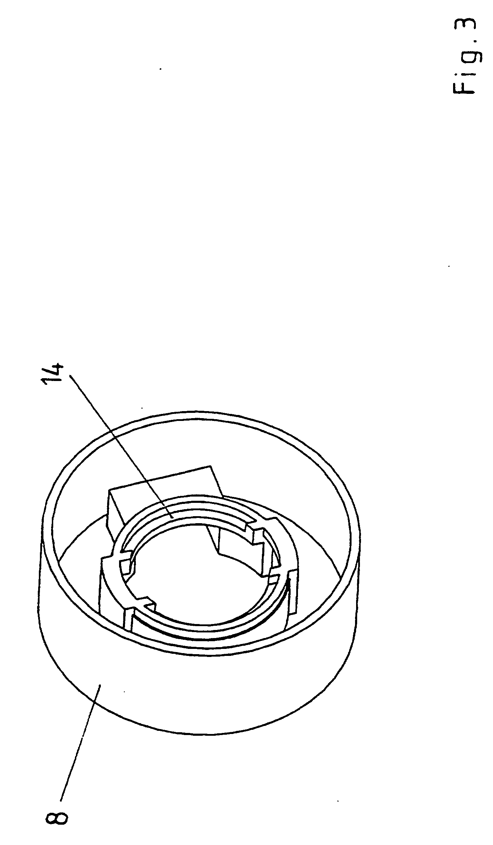

Fig. 3 zeigt eine perspektivische Darstellung des Schaltergehäuses 8 mit dem Anschlag 14 zur Abstützung der Stirnfläche 13 am Lagerrohr 1 . Das Rastprofil 7 an den elastischen Zungen 6 wird vom Gegenprofil 15 aufgenommen. Dadurch wird ein Verdrehen sowie ein Herausziehen des Lagerrohrs im montierten Zustand verhindert und nach Befestigung der Klemmschelle 12 ist eine sichere Fixierung am Lenker gewährleistet.

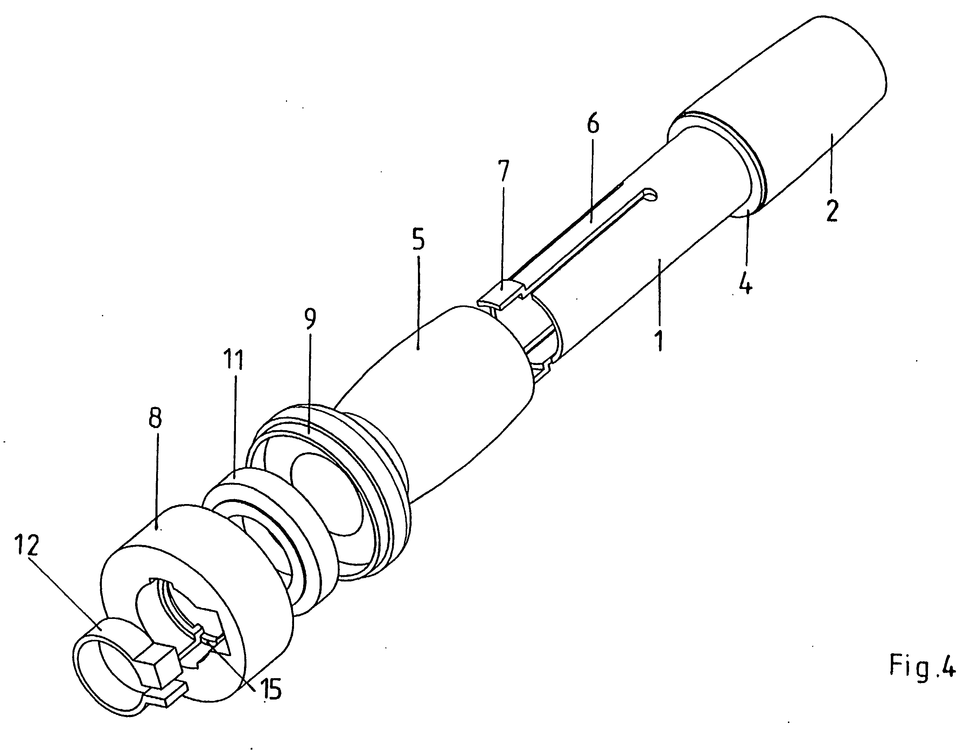

Fig. 4 ist eine Explosionsdarstellung der Schalterkomponenten vor der Montage. Mit dem Lagerrohr 1 ist das Griffendstück 2 bereits starr verbunden. Die elastischen Zungen 6 mit den Rastprofilen 7 werden zusammengedrückt, bis sie durch den Innendurchmesser des Drehgriffteils 5 und der Aufwickelspule 11 passen und in die Ausnehmungen der Gegenprofile 15 am Gehäuse 8 , das die restliche Schaltermechanik beinhaltet, einschnappen. Nach Einlegen der Klemmschelle 12 in das Schaltergehäuse 8 und Anbringen einer hier nicht gezeigten Schraube ist die Vormontage des Drehgriffschalters abgeschlossen er kann somit einteilig am Lenker angebracht werden. Der Schaltzug kann während der Vormontage direkt in die Aufwickelspule oder später durch ein Fenster im Schaltergehäuse 8 eingehängt werden. Der vormontierte Drehgriffschalter bildet eine kompakte Baueinheit und kann ohne ein Entfernen der Klemmschelle 12 und Zusammendrücken der elastischen Zungen 6 nicht demontiert werden.

### Bezugszeichenliste

- 1: Lagerrohr
- 2: Griffendstück
- 3: Overmolding-Verbindung
- 4: Zwischenscheibe
- 5: Drehgriffteil
- 6: Elastische Zunge
- 7: Rastprofil
- 8: Schaltergehäuse
- 9: Rand
- 10: Schnappverbindung
- 11: Aufwickelspule
- 12: Klemmschelle
- 13: Stimfläche
- 14: Anschlag
- 15: Gegenprofil

## Patentansprüche

1. Integrierter, auf dem Lenker eines Fahrrades montierbarer Drehgriffschalter für die Betätigung von Fahrrad-Gangschaltungs-Einrichtungen durch einen Seilzug, mit
einem Schaltergehäuse (8), montierbar am Lenkerrohr,
einem Lagerrohr (1), das mit dem Schaltergehäuse (8) verbunden ist,
einer Aufwickelspule (11), die drehbar im Schaltergehäuse (8) und auf dem Lagerrohr (1) angeordnet ist, um den Seilzug zu betätigen,
einem Drehgriffteil (5), das drehbar auf dem Lagerrohr (1) und rotatorisch betätigbar auf dem Lagerrohr (1) angeordnet ist, wobei dieses Drehgriffteil (5) so mit der Aufwickelspule (11) verbunden ist, dass es mit der Aufwickelspule gemeinsam rotiert;
einem Griffendstück (2), das relativ fest zum Lenkerrohr angeordnet werden kann und
eine feste Verbindung zum Lagerrohr (1) aufweist,
wobei zwischen dem Lagerrohr (1) und dem Schaltergehäuse (8) eine dreh- und verschiebefeste Verbindung besteht;
**dadurch gekennzeichnet,**
**dass** zwischen dem Lagerrohr (1) und dem Griffendstück eine direkte dreh- und verschiebefeste Verbindung besteht.

2. Integrierter Drehgriffschalter nach Anspruch 1,
**dadurch gekennzeichnet,**
**dass** das Griffendstück (2) axial unverschieblich und drehfest mit dem Lagerrohr (1) verbunden ist.

3. Integrierter Drehgriffschalter nach Ansprüchen 1 und 2,
**dadurch gekennzeichnet,**
**dass** das Lagerrohr (1) und das Schaltergehäuse (8) lösbar miteinander verbunden sind.

4. Integrierter Drehgriffschalter nach Ansprüchen 1 bis 3,
**dadurch gekennzeichnet,**
**dass** das Griffendstück (2) aus elastischem Material, vorzugsweise hergestellt mittels Overmolding-Technologie, ein fester Bestandteil des Lagerrohres (1) ist und somit gegen axiale Verschiebung und Verdrehung gegenüber dem Lagerrohr (1) gesichert ist.

5. Integrierter Drehgriffschalter nach Ansprüchen 1 bis 4,
**dadurch gekennzeichnet,**
**dass** das Griffendstück (2) das Lagerrohr (1) in axialer Richtung überragt.

6. Integrierter Drehgriffschalter nach Ansprüchen 1 bis 5,
**dadurch gekennzeichnet,**
**dass** der Innendurchmesserbereich des über das Lagerrohr (1) hinausragenden Griffendstückes so eng dimensioniert ist bzw. über verformbare Erhebungen verfügt, daß damit ein spielfreier Sitz auf dem Lenker gewährleistet ist.

7. Integrierter Drehgriffschalter nach Ansprüchen 1 bis 6,
**dadurch gekennzeichnet,**
**dass** am Lagerrohr im Bereich des Griffendstückes Durchbrüche vorgesehen sind, durch die das elastische Material des Griffendstückes nach innen überragt, um ein eventuelles Spiel des Lagerrohrs auf dem Lenker durch Verformung des elastischen Materials auszugleichen bzw. zu verhindern.

8. Integrierter Drehgriffschalter nach Ansprüchen 1 bis 7,
**dadurch gekennzeichnet,**
**dass** der über den axialen Bereich des Lagerrohres hinausragende Bereich des Griffendstückes (2) nur axiale oder Umfangs-Bereiche aufweist, die bei der Montage des Drehgriffes auf dem Lenkerrohr in Kontakt mit dem Lenkerrohr kommen.

9. Integrierter Drehgriffschalter nach Ansprüchen 1 bis 8,
**dadurch gekennzeichnet,**
**dass** das Rastprofil (7) am Lagerrohr (1) mit dem Gegenprofil (15) am Schaltergehäuse (8) eine Schnappverbindung bildet, zu deren Zusammenfügen die elastische Zunge (6) nach radial innen verformt wird, wodurch eine formschlüssige Verbindung des Lagerrohrs mit dem Schaltergehäuse entsteht und die Schalterkomponenten wie Drehgriffteil (5), Aufwickelspule (11) und das Schaltergehäuse (8) mit den restlichen Schaltkomponenten zu einer funktionsfähigen Einheit zusammengehalten werden.

10. Integrierter Drehgriffschalter nach Ansprüchen 1 bis 9,
**dadurch gekennzeichnet,**
**dass** am Lagerrohr (1) vor dem Griffendstück (2) eine oder mehrere lose oder fest mit dem Lagerrohr (1) verbundene Zwischenscheiben (4) vorgesehen sind, die dem leichtgängigen Drehgriffteil (5) auf der einen Seite als axialer Anschlag dienen und zudem die Reibung zwischen Griffendstück (2) und Drehgriffteil (5) deutlich reduzieren.

11. Integrierter Drehgriffschalter nach Ansprüchen 1 bis 10,
**dadurch gekennzeichnet,**
**dass** das Drehgriffteil (5) die Aufwickelspule(11) antreibt und diese axial an einem Bund am Schaltergehäuse anläuft, wobei das axiale Spiel des Drehgriffteils (5) durch die Länge des Lagerrohres (1) bzw. von der Länge zwischen Zwischenscheibe (4) und den Rastprofilen (7) am Lagerrohr (1) bestimmt wird.

12. Integrierter Drehgriffschalter nach Ansprüchen 1 bis 11,
**dadurch gekennzeichnet,**
**dass** das Griffendstück (2) und / oder das Drehgriffteil (5) aus einem form- und farbbeständigen Elastomerwerkstoff bestehen und entweder eine runde oder eine, der Handkontur angepaßte, Kontur aufweisen.

## Claims

1. Integrated twist-grip switch, mountable on the handlebar of a bicycle, for the actuation of bicycle gearshift devices by means of a cable assembly, with
a switch housing (8), mountable on the handlebar tube,
a bearing tube (1) which is connected to the switch housing (8),
a winding reel (11) which is arranged rotatably in the switch housing (8) and on the bearing tube (1) in order to actuate the cable assembly,
a twist-grip part (5) which is arranged rotatably on the bearing tube (1) and rotationally actuably on the bearing tube (1), this twist-grip part (5) being connected to the winding reel (11) in such a way that it rotates jointly with the winding reel,
a grip end piece (2) which can be arranged relatively fixedly with respect to the handlebar tube and which has a fixed connection to the bearing tube (1),
there being between the bearing tube (1) and the switch housing (8) a connection which is fixed in terms of rotation and of displacement,
**characterized in that** between the bearing tube (1) and the grip end piece there is a direct connection which is fixed in terms of rotation and of displacement.

2. Integrated twist-grip switch according to Claim 1, **characterized in that** the grip end piece (2) is connected to the bearing tube (1) axially nondisplaceably and fixedly in terms of rotation.

3. Integrated twist-grip switch according to Claims 1 and 2, **characterized in that** the bearing tube (1) and the switch housing (8) are releasably connected to one another.

4. Integrated twist-grip switch according to Claims 1 to 3, **characterized in that** the grip end piece (2) consisting of elastic material, preferably produced by means of overmoulding technology, is a fixed integral part of the bearing tube (1) and is thus secured against axial displacement and rotation relative to the bearing tube (1).

5. Integrated twist-grip switch according to Claims 1 to 4, **characterized in that** the grip end piece (2) projects beyond the bearing tube (1) in the axial direction.

6. Integrated twist-grip switch according to Claims 1 to 5, **characterized in that** the inside-diameter region of the grip end piece projecting beyond the bearing tube (1) is closely dimensioned, or has deformable elevations, such that a play-free fit on the handlebar is thereby ensured.

7. Integrated twist-grip switch according to Claims 1 to 6, **characterized in that** there are provided on the bearing tube, in the region of the grip end piece, perforations through which the elastic material of the grip end piece projects inward, in order to compensate or prevent any possible play of the bearing tube on the handlebar as a result of the deformation of the elastic material.

8. Integrated twist-grip switch according to Claims 1 to 7, **characterized in that that** region of the grip end piece (2) which projects beyond the axial region of the bearing tube has only axial or circumferential regions which come into contact with the handlebar tube when the twist grip is mounted on the handlebar tube.

9. Integrated twist-grip switch according to Claims 1 to 8, **characterized in that** the latching profile (7) on the bearing tube (1) with the counterprofile (15) on the switch housing (8) forms a snap connection, for the assembly of which the elastic tongue (6) is deformed radially inwards, with the result that a positive connection of the bearing tube to the switch housing is obtained, and the switch components, such as the twist-grip part (5), the winding reel (11) and switch housing (8), are held together with the remaining switching components, to form a functional unit.

10. Integrated twist-grip switch according to Claims 1 to 9, **characterized in that** there are provided on the bearing tube (1), in front of the grip end piece (2), one or more intermediate discs (4) which are connected loosely or firmly to the bearing tube (1) and which serve as an axial abutment for the easily moving twist-grip part (5) on one side and also markedly reduce the friction between the grip end piece (2) and the twist-grip part (5).

11. Integrated twist-grip switch according to Claims 1 to 10, **characterized in that** the twist-grip part (5) drives the winding reel (11), and the latter runs axially against a collar on the switch housing, the axial play of the twist-grip part (5) being determined by the length of the bearing tube (1) or by the length between the intermediate disc (4) and the locking profiles (7) on the bearing tube (1).

12. Integrated twist-grip switch according to Claims 1 to 11, **characterized in that** the grip end piece (2) and/or the twist-grip part (5) consist of dimensionally stable and colour-fast elastomeric material and have either a round contour or a contour matched to the hand contour.

## Revendications

1. Sélecteur intégré à poignée rotative, qui peut être monté sur un guidon de bicyclette afin d'actionner par traction d'un câble un dispositif de changement de vitesse pour bicyclette, qui présente
un boîtier de sélecteur (8) qui peut être monté sur le tube de guidon,
un tube de support (1) qui est relié au boîtier de sélecteur (8),
une bobine d'enroulement (11) qui est agencée à rotation dans le boîtier de sélecteur (8) et sur le tube de support (1) et est destinée à tirer le câble,
une partie rotative (5) de poignée qui est agencée sur le tube de support (1) de manière à pouvoir tourner et de façon à pouvoir être actionnée en rotation sur le tube de support (1), cette partie de poignée rotative (5) étant reliée à la bobine d'enroulement (11) de façon à tourner de manière solidaire avec celle-ci,
une partie d'extrémité (2) de la poignée, qui peut être agencée fixement par rapport au tube de guidon et qui présente une liaison fixe avec le tube de support (1),
dans lequel la liaison entre le tube de support (1) et le boîtier de sélecteur (8) résiste au déplacement et à la rotation,
**caractérisé en ce qu'**il y a entre le tube de support (1) et la partie en extrémité de la poignée une liaison directe qui résiste au déplacement et à la rotation.

2. Sélecteur intégré à poignée rotative selon la revendication 1, **caractérisé en ce que** la partie (2) d'extrémité de poignée est reliée au tube de support (1) de façon à résister à la rotation et à ne pas pouvoir être déplacée axialement.

3. Sélecteur intégré à poignée rotative selon les revendications 1 et 2, **caractérisé en ce que** le tube de support (1) et le boîtier de sélecteur (8) sont reliés l'un à l'autre de manière à pouvoir être séparés.

4. Sélecteur intégré à poignée rotative selon les revendications 1 à 3, **caractérisé en ce que** la partie (2) d'extrémité de poignée, qui est constituée d'un matériau élastique et est de préférence fabriquée par la technique du surmoulage, est une partie fixe du tube de support (1) et est ainsi protégée contre le déplacement axial et la rotation par rapport au tube de support (1).

5. Sélecteur intégré à poignée rotative selon les revendications 1 à 4, **caractérisé en ce que** la partie (2) d'extrémité de poignée dépasse du tube de support (1) dans la direction axiale.

6. Sélecteur intégré à poignée rotative selon les revendications 1 à 5, **caractérisé en ce que** la région de la section intérieure de la partie d'extrémité de poignée qui dépasse du tube de support (1) est dimensionnée de manière ajustée et est dotée de reliefs déformables de manière à assurer ainsi sur le guidon un ajustage dépourvu de jeu.

7. Sélecteur intégré à poignée rotative selon les revendications 1 à 6, **caractérisé en ce que**, sur le tube de support, dans la région de la partie en extrémité de poignée, sont prévues des perforations dans lesquelles le matériau élastique de la partie en extrémité de poignée pénètre afin de compenser ou d'empêcher un éventuel jeu du tube de support sur le guidon par déformation du matériau élastique.

8. Sélecteur intégré à poignée rotative selon les revendications 1 à 7, **caractérisé en ce que** seules des régions axiales ou périphériques de la région de la partie (2) d'extrémité de poignée qui dépasse de la région axiale du tube de support entrent en contact avec le tube de guidon lors du montage de la poignée rotative sur celui-ci.

9. Sélecteur intégré à poignée rotative selon les revendications 1 à 8, **caractérisé en ce que** le profilé d'encliquetage (7) situé sur le tube de support (1) constitue une liaison par encliquetage avec le profilé complémentaire (15) situé sur le boîtier de sélecteur (8), les deux profilés étant assemblés en déformant radialement vers l'intérieur les languettes élastiques (6), ce qui crée une liaison en correspondance de forme entre le tube de support et le boîtier de sélecteur et maintient les composants du sélecteur, par exemple la partie rotative (5) de poignée, la bobine d'enroulement (11) et le boîtier de sélecteur (8) et les autres composants de sélecteur en une unité fonctionnelle.

10. Sélecteur intégré à poignée rotative selon les revendications 1 à 9, **caractérisé en ce qu'**une ou plusieurs pièces intermédiaires (4) lâchement ou fixement reliées au tube de support (1) sont prévues sur le tube de support (1) en avant de la partie (2) d'extrémité de poignée afin de servir de butée axiale pour la partie libre de poignée rotative (5) et de réduire nettement le frottement entre la partie (2) d'extrémité de poignée et la partie rotative (5) de poignée.

11. Sélecteur intégré à poignée rotative selon les revendications 1 à 10, **caractérisé en ce que** la partie rotative (5) de poignée entraîne la bobine d'enroulement (11) et amène axialement celle-ci sur un collet du boîtier de sélecteur, le jeu axial de la partie rotative (5) de poignée étant déterminé par la longueur du tube de support (1) et par la longueur située sur le tube de support (1) entre la ou les pièces intermédiaires (4) et le profilé d'encliquetage (7).

12. Sélecteur intégré à poignée rotative selon les revendications 1 à 11, **caractérisé en ce que** la partie (2) d'extrémité de poignée et/ou la partie rotative (5) de poignée sont constituées d'un matériau élastomère dont la forme et la couleur sont stables et présentent un contour soit rond, soit adapté à celui de la main.
